# EUROPEAN PATENT APPLICATION

(11) **EP 1 712 759 A2**
(43) Date of publication of application: **18.10.2006**
(21) Application number: 06014124.9
(22) Date of filing: 22.12.2000
(51) Int. Cl.: F02B 25/22

(54) **A flange assembly for supplying additional air to two-stroke engine**

(30) Priority: 14.01.2000 SE 0000095
(62) Divisional of application: 00993786.3
(71) Applicant: Husqvarna Aktiebolag, 561 82 Husqvarna (SE)
(72) Inventor: Martinsson, Pär, 556 28 Jönköping (SE)

(57) **Abstract**

The invention refers to carburellors for crankcase scavenged two-stroke engines utilizing additional air that is led via scavenging ducts into the combustion chamber of the engine. More particularly it refers to a flange assembly for supporting an additional air supply at a carburetor (17), said flange assembly comprising:
a rear flange (14) preferably embodied as a thin-body flange (14) installed upon an end surface of a receiving carburettor (17) having a primary air duct (2); as an inlet duct for air through the carburettor to the engine;
the primary air duct extending through said flange (14) for alignment with the air intake of the receiving carburettor for establishing fluid communication there between;
an additional air duct (3) for additional air supply is extending through said flange (14) and having an air aperture in said flange, which aperture is spaced apart from an aperture for the primary air duct in the flange (14); and
a valve assembly operatively coupled to said flange and having a valve element positioned at said additional air aperture for opening and closing said additional air aperture.

## Description

### Technical field

The subject invention refers to a device according to claim 1 for a flange assembly for supporting an additional air supply at a carburetor associated with the engine

### State of the art

In order to reduce the fuel consumption and to achieve cleaner exhaust gases than formerly, two-stroke internal combustion engines have since long been designed with special flow ducts through which fresh air is introduced into the combustion chamber via the scavenging ducts before the air-fuel mixture is scavenged. Such a procedure means that already in the end of the engine power stroke, i.e. when the port of the exhaust duct is opened, fresh air, from now on called scavenging air or additional air, gets access to the combustion chamber, Thereby this air contributes to push the exhaust gases out of the combustion chamber. The ideal state would of course be that all exhaust gases are pushed out, and that the scavenged air-fuel mixture from the engine crankcase would be prevented by the additional air to reach the exhaust port before this is completely closed by the upward moving piston during the compression stroke. The real ideal position might be when the remaining amount of additional air is in a stoiciometric proportion to the air-fuel mixture enclosed in the engine cylinder. Such an ideal position is not achievable, and even for safety's sake, i.e. for achieving perfect combustion of the fuel, there must be an excess of air in the combustion chamber. Thereof comes the denomination additional air, since it in this case is the air that is added in excess of the air that is mixed with the fuel in the carburettor.

What has been described so far are the conditions existing for a two-stroke engine at operational speed. The prevailing circumstances, considering the percentage amount of the additional air, are in no way critical. The problem becomes acute when the engine runs at idle speed. In order to keep this speed as low as possible, the carburettor adjustment by means of adjuster screws for fuel and air must be secured in a position where by the movement of the piston just as much fuel is sucked into the engine, as well as an adapted amount of air, as needed for the engine to continue to run smoothly without any risk of stopping unwarrantably. Hereby it is considered that additional air should not be able to enter into the engine, since a small variation in the supply of air would result in a too lean air-fuel mixture, so that one or several explosions in the combustion chamber would be too poor to enable the piston to move round to the next ignition point and thereby stop the engine.

Hitherto known valve arrangements for additional air have a number of disadvantages. The prior art valves have been either of the barrel valve type or the so called butterfly type, in other matters named rosette valve. Both types of valves are located in the additional air duct, albeit in connection to its inlet from the intake muffler they arc both causing turbulent air flow that complicates the proportion of additional air.

When it comes to comparatively small engines for portable working tools the exactness of said valves is important to achieve enough exact control of the amount of air. This is the very opposite of the demand for a rugged tool for use in a climatologically tough or dusty environment. Although the air passing through said valves has passed through a filter, very small particles cannot be separated but reaches into the valves.

Since the valves of the barrel valve type have relatively large sealing areas, a relatively small amount of dust particles can cause a deficient control function of the valve, thus resulting in irregular engine speed. As described, dirt particles that will get stuck on the sealing areas will result in wear on these and thereby deteriorated sealing ability of the valve, even after it has been cleaned.

In a damp and cold environment freezing can occur in the valve, due to its large sealing areas. The butterfly valve provides a very varying degree of leakage at closing depending on how rapidly it is being closed. The closing is also very much affected by dirt.

### Purpose of the invention

The purpose of the subject invention is to create a valve device in which the hitherto prior art disadvantages of a valve are avoided, and which for control of the additional air for a two-stroke internal combustion engine is arranged to follow the throttle operation of this. The purpose is achieved in an invention having the characteristics appearing from the appended claims.

### Summary of the invention

In an inlet unit of a two-stroke internal combustion engine a special flow duct, besides the primary air duct, is arranged and intended for additional air to help the scavenging of the combustion chamber. The inlet of this flow duct is provided with a flap valve, preferably with an abutment against a lip-shaped sealing made of a compliant material and circumscribing the inlet opening. The valve plate is pivotably mounted to a shaft, located either in close proximity outside the inlet opening, or, at a distance from this, where in the latter case the valve plate is mounted to a distance device, e.g. in form of a pair of shanks, which turn round said shaft.

The turning of the air-regulating valve takes place in synchronism with the turning of the throttle valve, a lever being connected, in a determined angle, with the turning shaft of said valve. To this lever a link rod is connected and its other end is pivotably mounted to a second lever fixed to the turning shaft of the additional air- regulating valve, in a determined angle.

The angular position of the levers in relation to the turning shaft of each valve respectively are chosen, so that when the throttle valve is in the idling position the additional air-regulating valve is completely closed. Then, when the engine speed is increasing as the throttling turns the turning shaft of the throttle valve, the additional air-regulating valve will first be opened slowly, thereafter proportionally more rapidly.

In order to secure the air-regulating valve's airtight blockage of the inlet of the additional air duct, which continues as air ducts, the valve is preferably spring-loaded.

The invention enables that any cross-sectional shape can be chosen for the additional air duct. This is an advantage for very small engines, and by having e.g. an oval cross-section at the inlet of the duct the transition into two branches would thus be simplified, each one connecting to the engine cylinder at each side of the carburettor duct.

In an embodiment of the invention the lever on the turning shaft of the throttle valve is replaced by an eccentrically mounted camshaft pulley, and the link rod by a push rod connected with the turning shaft of the valve of the additional air duct via a valve supporting device. This can be spring-loaded for sealed contact of the valve plate against its seat.

### Description of the drawings

Figure 1 illustrates in perspective an intake unit seen from the inlet side, with the additional air duct provided with a valve and located below the primary air duct. Since adjuster screws for fuel and primary air are all conventional these are left out here.
Figure 2 illustrates the same inlet unit, but with the additional air-regulating valve in an opened position.
Figure 3 shows an embodiment of the invention where the additional air-regulating valve is in a closed position and has its supporting shaft located above the primary air duct, and from there a supporting device is located astraddle of the primary air duct supporting the valve plate.
Figure 4 illustrates the same inlet unit as in figure 3, but with the additional air-regulating valve in an opened position.

### Description of preferred embodiments

An inlet unit 1 for a two-stroke internal combustion engine having an inlet duct, here named primary air duct 2, and a supply duct for fuel (not shown). Furthermore an additional air duct 3, preferably located below the primary air duct, for introduction of additional air into the engine's cylinder by the end of the engine power stroke.

The additional air duct 3 can be closed at its inlet opening 4 by a valve plate 5 embodied as a flap valve. This is pivotably mounted by means of a turning shaft 6 to the upper edge of a valve plate 5. The turning shaft 6 is journalled in supporting rings 7, 8 embodied as integrated parts of a rear flange 14, which also can support an inlet muffler with an air-filter (not shown). A front flange 15 is provided with a number of screws 16, whereof two are shown. These screws will join the flanges 33, 14 together and in this manner the carburettor 17 and the additional air duct 3 are hold fixed thus creating the inlet unit 1. The both ducts 2 and 3 are connected at its front end to the cylinder, in the shown case flange joint.

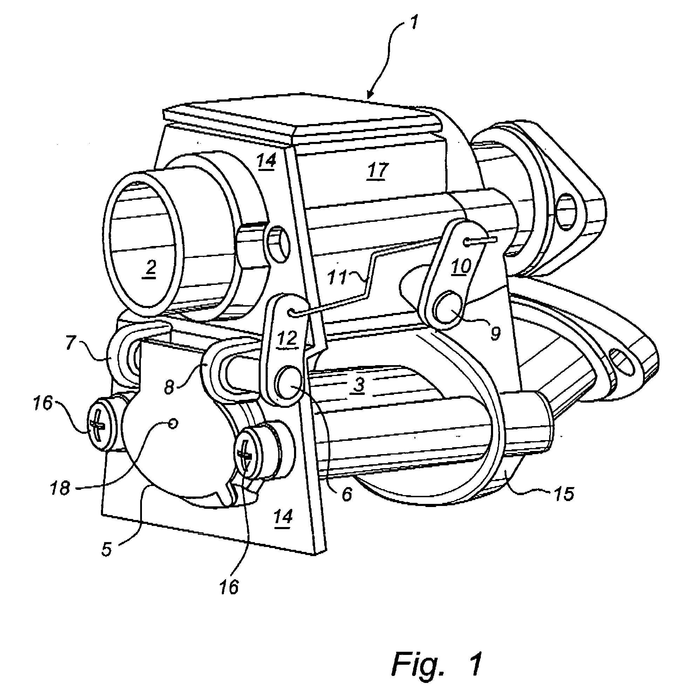

In conventional way, in the primary air duct 2 of the inlet unit 1 a valve plate for regulating of fuel gas supply is pivoted around a transversal axis, which at its end 9 extends outside the inlet unit 1. At this axis end 9 a first lever 10 is fixed in a determined angle in relation to the plane of the valve plate. By means of a link rod 11 this lever is connected to a second lever 12 fixed to the additional air duct's 3 valve plate's 5 turning shaft 6. By choosing the length of this lever to be shorter or longer than the first lever 10 the opening characteristic of the valve plate 5 can be determined, i.e. whether the valve plate should open faster or slower than the throttle valve. The lever's mutual angles and their angles in relation to the link rod will also influence this matter of fact. The basic angles that are chosen at idle according to figure 1 are thus of great importance.

Seen in the flow direction of the fuel/air gas through the inlet unit 1 the levers 10,12 with linkage are located on its right side. So regarded the shaft of the throttle valve will turn in a clockwise direction at throttling. Thereby, due to the affection of the linkage the turning shaft 6 of the valve plate 5 of the additional air duct 3 will thus turn in a clockwise direction and in this way turn the valve plate 5 at the inlet opening 4 out from its abutment against the additional air duct 3.

Preferably a sealing (not shown) made of a compliant material, such as heat- and-cold resistant polymer, is arranged around the inlet opening 4. This scaling will make sure that leakage air will not be sucked into the additional air duct 3 along the periphery of the valve plate 5. In a preferred embodiment the sealing has a lip, which extends perpendicularly towards the valve plate and circumferentially surrounds the inlet opening 4. In order to properly prevent said jump draw when the engine is idling the valve plate 5 could be provided with a spring device, which presses this against said sealing.

For certain engines it might be justified to use additional air even at idling. In order to enable an exact amount of the additional air flow for this purpose a small air hole 18 is therefore taken up in the valve plate 5. Adjusting screws for supply of fuel and primary air will then be adjusted in relation to the additional air that might reach the cylinder at such kind of arrangement at idling.

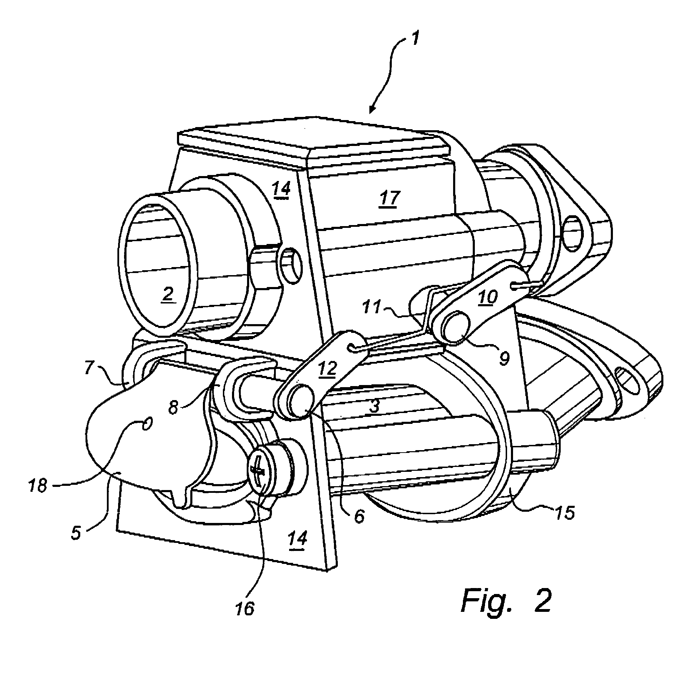

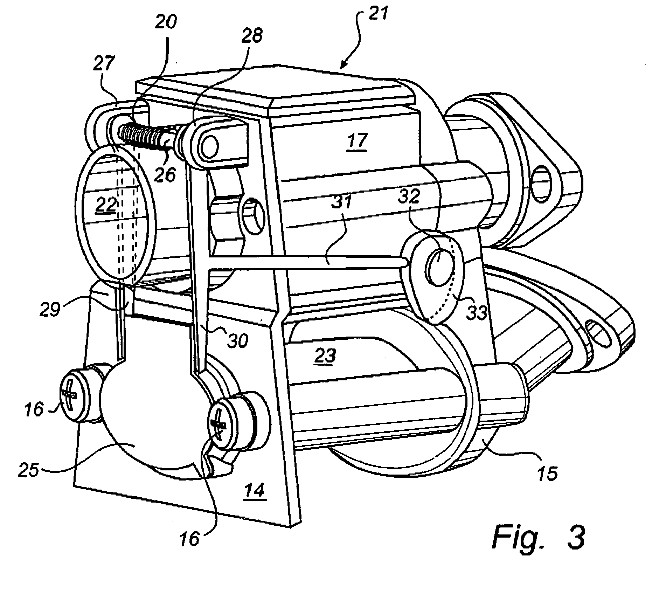

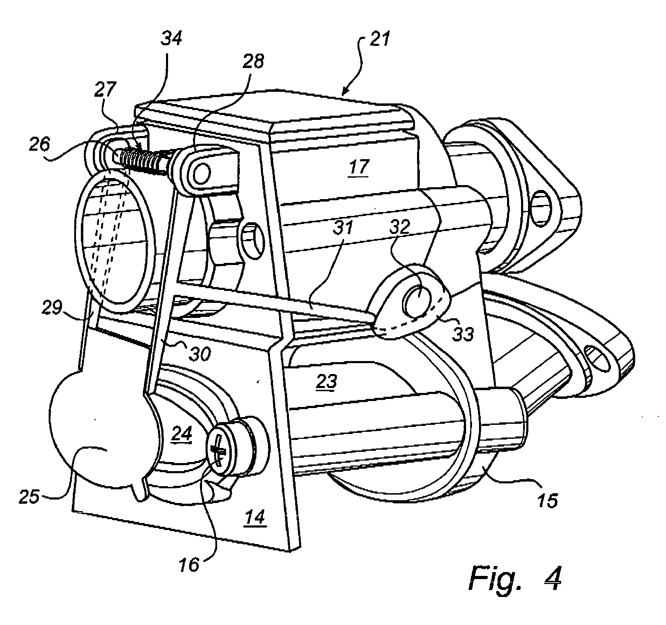

To further improve the possibilities to regulate the flow of additional air passing by the valve plate into the additional air duct a preferred embodiment of the invention has been developed, according to the illustrations in figure 3 and 4. In this embodiment the inlet unit 1. with its primary air duct 2 and additional air duct 3 completely corresponds to what is illustrated in the figures 1 and 2. The differences are present in the suspension of the valve plate at the inlet of the additional air duct and in the transfer arrangement for the setting of the valve plate in relation to the setting position of the throttle valve.

An inlet unit 21 is arranged with a primary air duct 22, which in its inside has known devices for supply and vaporization of fluid fuel and for flow regulation of the air/fucl mixture. In parallel with the primary air duct 22 there is a duct 23 for leading additional air into air ducts of the engine cylinder. In front of the inlet 24 of the additional air duct 23 a valve plate 25 is movably mounted. This is either firmly or movably supported by a fork-shaped device comprising a turning shaft 26 journalled in bearing rings 27,28 integrated with the rear flange 14 and a pair of shanks 29, 30. A push rod 31 is connected with one shank 30 of the fork-shaped device, in the figures 3 and 4 shown as a unit with the shank 30. The push rod 31 can be pivotably connected to the shank 30, or, in case of a movable connection between the fork-shaped device and the valve plate 25, be connected to this at such a point that the valve plate will always lift from its pivot seat at the inlet 24 of the additional air duct 23 parallel with the seat. A torsion spring 20 is provided around the turning shaft 26 and will affect the valve plate towards closing.

The free end of the push rod 31 fits against camshaft pulley 33 that is centrically or eccentrically firmly attached to end 32 extending from the inlet unit 21 on the turning shaft's throttle valve. At each setting of the throttle valve, e.g. at throttle operation, the position of the camshaft pulley 33 will change in accordance with the turning of the shaft supporting the valve. Hereby a portioning of the additional air for the desired engine speed at each point of time is achieved.

The arrangement of having a cam-controlled opening of the valve plate 25 provides a lot of possibilities due to the shape and eccentricity of the camshaft pulley 33 to control the degree of opening and thus the amount of additional air. Thereby, if desirable for any type of engine, the valve plate 25 can be opened very much already at initial throttling, and be throttled at higher engine speed, or vice versa.

Since the valve plate 25 in this embodiment has its pivotal point of the turning shaft 26 located relatively far away from the centre of the inlet 24, the valve plate 25 will always move practically in parallel with the seat of the valve plate. No matter whether this includes the above-mentioned sealing made of a compliant material or if the valve plate 25 is ground into its seat for close sealing, the air flow into the additional air duct will still take place practically free from turbulence. This is of great importance considering the small dimensions that are prevailing for the smallest engines this invention may be intended for.

Consequently, the valve plate closes against an end surface of the additional air duct 3. This will not necessarily be perpendicular towards the duct but can be oblique so that the opening angle of the valve plate, from being completely closed to being fully opened, can be varied.

It should be obvious for the skilled man that a number of various embodiments can be developed within the scope of the following patent claims.

The invention could also be claimed as follows:
1. Device for control of additional air to at least one scavenging duct of a two-stroke internal combustion engine, and motion transmitting parts (10,11,12;31,32) are mechanically connected to the engine's throttle control for setting a valve (5;25) arranged at the inlet of an additional air duct (3;23), **characterized** in that said valve is pivotably mounted by means of a turning shaft (6; 26), which extends outside the flow section of the inlet duct.
2. Device according to claim 1, **characterized in that** the motion transmitting parts comprises, on the one hand a first lever (10) firmly connected to a turning shaft (9) of the engine's throttle valve, and on the other hand a second lever (12) firmly connected to a turning shaft (6) of the additional air regulating valve (5), between which levers a link rod (11) is pivotably mounted to the free ends of each lever respectively.
3. Device according to claim 2, **characterized in that** the angles at which the first lever (10) is fixed to the turning shaft (9) of the throttle valve, as well as the second lever (12) is fixed to the turning shaft (6) of the additional air regulating valve (5), are chosen so that, at increasing throttle, the additional air regulating valve will be opened exponentially.
4. Device according to claim 2, **characterized in that** the first lever (10) is longer than the second lever (12).
5. Device according to claim 2, **characterized in that** the first lever (10) is shorter than the second lever (12).
6. Device according to any one of the preceding claims, **characterized in that,** at idling, by means of the levers (10,12) and the link rod (11), the additional air regulating valve is kcpt tightly closed against a neck-shaped polymer scaling circumscribing the additional air inlet.
7. Device according to claim 6, **characterized in that**, in order to achieve a satisfactory closing force, the device is provided with a torsion spring (20; 34) arranged around the turning shaft (6; 26) of the additional air regulating valve (5; 25) and circumscribing this, at one end fixed to the carburettor housing (1; 21) and at the other end affecting the additional air regulating valve.
8. Device according to any one of the preceding claims, **characterized in that** the additional air duct (3; 23) has an oval cross-section.
9. Device according to claim 1, **characterized in that**, to the turning shaft of the throttle valve an eccentrically shaped camshaft pulley (33) is attached, against which one end of a push rod (31) fits and the other end of the push rod is connected to a fork-shaped device, between which shanks (29,30) a valve plate (25) is arranged in front of the inlet (24) of the additional air duct (23), and in that the connecting parts of the fork-shaped device's shanks consist of a turning shaft (26) journalled in bearing rings (27, 28) at one side of the carburettor housing (21).
10. Device according to claim 9, **characterized in that** the fork-shaped device supporting the valve plate (25) of the additional air duct (23) is spring-loaded against the inlet (24) of the additional air duct to tightly seal when the occentric camshaft pulley (33) is not pushing the push rod (31) against the opening position of the valve plate (25).

## Claims

1. A flange assembly for supporting an additional air supply to an internal combustion engine at a carburetor (17) associated with the engine, said flange assembly comprising:
a rear flange (14) preferably embodied as a thin-body flange (14) installed upon an end surface of a receiving carburettor (17) having a primary air duct (2); as an inlet duct for air through the carburettor to the engine;
the primary air duct extending through said flange (14) for alignment with the air intake of the receiving carburettor for establishing fluid communication there between;
an additional air duct (3) for additional air supply is extending through said flange (14) and having an air aperture in said flange, which aperture is spaced apart from an aperture for the primary air duct in the flange (14); and
a valve assembly operatively coupled to said flange and having a valve element positioned at said additional air aperture for opening and closing said additional air aperture.
